Europäisches Patentamt

European Patent Office

Office européen des brevets

(19)

(11) Numéro de publication: **0 036 344**
A1

(12) **DEMANDE DE BREVET EUROPEEN**

(21) Numéro de dépôt: **81400270.5**

(22) Date de dépôt: **20.02.81**

(51) Int. Cl.³: **H 04 L 27/20**

(30) Priorité: **05.03.80 FR 8004948**

(43) Date de publication de la demande:
**23.09.81 Bulletin 81/38**

(84) Etats contractants désignés:
**DE GB IT NL SE**

(71) Demandeur: **THOMSON-CSF**
**173, Boulevard Haussmann**
**F-75360 Paris Cedex 08(FR)**

(72) Inventeur: **Fourcade, Pierre**
**THOMSON-CSF SCPI 173, bld Haussmann**
**F-75360 Paris Cedex 08(FR)**

(74) Mandataire: **Courtellemont, Alain et al,**
**"THOMSON-CSF" - SCPI 173, bld Haussmann**
**F-75360 Paris Cedex 08(FR)**

(54) Procédé de modulation de phase par un signal binaire, et dispositif mettant en oeuvre ce procédé.

(57) Procédé et dispositif de modulation de phase où le signal modulant est un signal binaire.

Afin de pourvoir séparer par filtrage le signal utile des signaux parasites créés lors de la modulation, un signal de la forme $\cos[\omega_o t + \varphi(t)]$ est produit où $\omega_o$ est une constante, t le temps et $\varphi(t)$ une grandeur représentative de la phase modulée. Ce signal est mélangé à un signal de la forme $\sin \omega' t$ où $\omega'$ est une constante; le signal obtenu est filtré dans un filtre passe-bande pour en extraire le signal utile, de la forme $\sin[\omega t + \omega(t)]$, dont la bande des fréquences est centrée sur $\frac{\omega}{2\pi} = \frac{\omega' + \omega}{2}_0$ alors que les signaux parasites les plus gênants sont constitués par un signal à la fréquence $\frac{\omega}{2\pi}$ et un signal situé dans une bande de fréquences centrée sur $\frac{\omega' - \omega}{2\pi}_0$.

Application à la modulation de phase par un signal binaire.

FIG_4

1

# PROCEDE DE MODULATION DE PHASE PAR UN SIGNAL BINAIRE ET DISPOSITIF METTANT EN OEUVRE CE PROCEDE

La présente invention se rapporte, en particulier, à un procédé de modulation de phase par un signal binaire, consistant à produire un signal de la forme $\sin\left[\omega t + \varphi(t)\right]$ où $\omega$ est une constante, t le temps et $\varphi(t)$ la phase modulée.

Il est connu d'effectuer une telle modulation en produisant des signaux de la forme $\sin \omega t$, $\cos \omega t$, $\sin \varphi(t)$ et $\cos \varphi(t)$ ; un mélange du premier avec le quatrième et du deuxième avec le troisième de ces signaux, suivi d'une addition des deux signaux ainsi obtenus, permet de produire le signal recherché, c'est-à-dire le signal de la forme $\sin\left[\omega t + \varphi(t)\right]$. En fait ceci n'est que théorique car les circuits utilisés pour obtenir les signaux précités ne sont pas parfaits; il en résulte des signaux résiduels mélangés au signal $\sin\left[\omega t + \varphi(t)\right]$ dont les plus gênants sont de la forme $\sin \omega t$ et $\sin\left[\omega t - \varphi(t)\right]$ car ils ne peuvent pas être séparés du signal utile dont ils tendent à perturber la transmission; le maintien d'une bonne transmission de l'information coûte alors cher.

La présente invention a pour but d'éviter ces inconvénients en permettant un filtrage qui débarrasse le signal utile des autres signaux.

Selon l'invention ce but est atteint, en particulier, par la mise en oeuvre du procédé tel qu'exposé dans la revendication 1 ci-jointe.

Les avantages obtenus grâce à cette invention résident en particulier dans le fait que, le signal obtenu étant exempt de signaux perturbateurs, ne nécessite pas la prise de précautions spéciales, et donc onéreuse pour sa transmission.

La présente invention sera mieux comprise et d'autres caractéristiques apparaîtront à l'aide de la description ci-après et des figures s'y rapportant qui représentent :

- la figure 1, un dispositif mettant en œuvre un procédé de modulation de phase par un signal binaire, selon l'art connu,

- la figure 2, un graphique relatif à la figure 1,

- la figure 3, un dispositif mettant en œuvre le procédé selon l'invention,

- la figure 4, un graphique relatif à la figure 3.

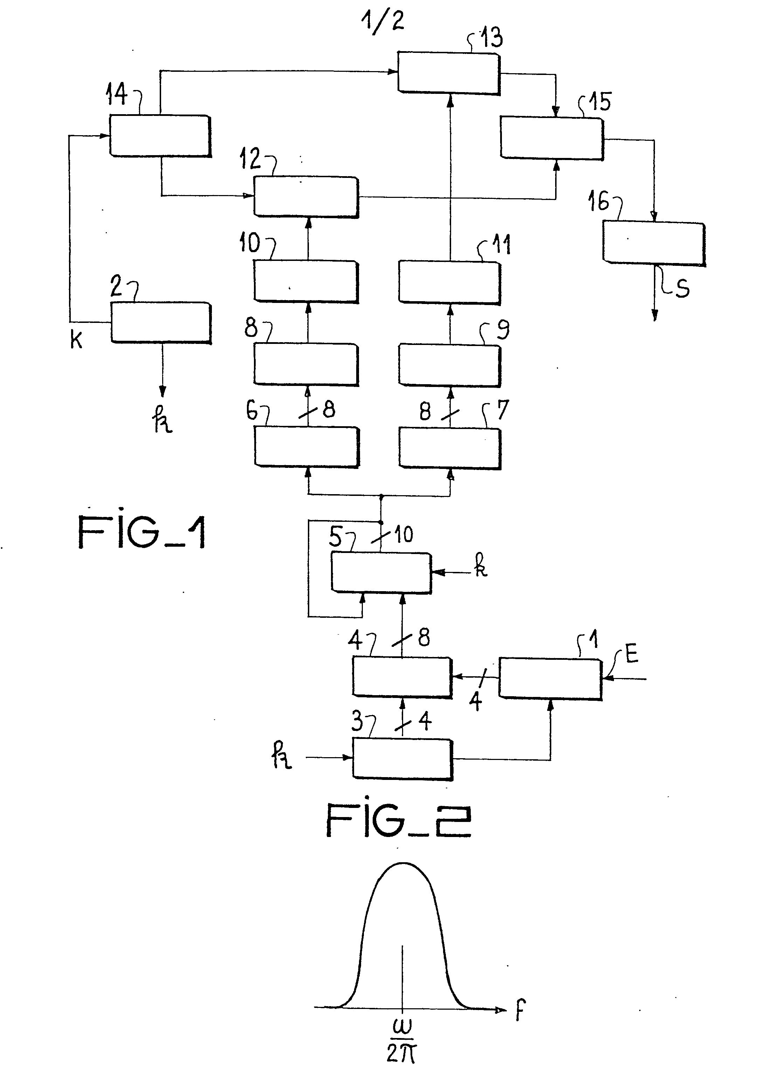

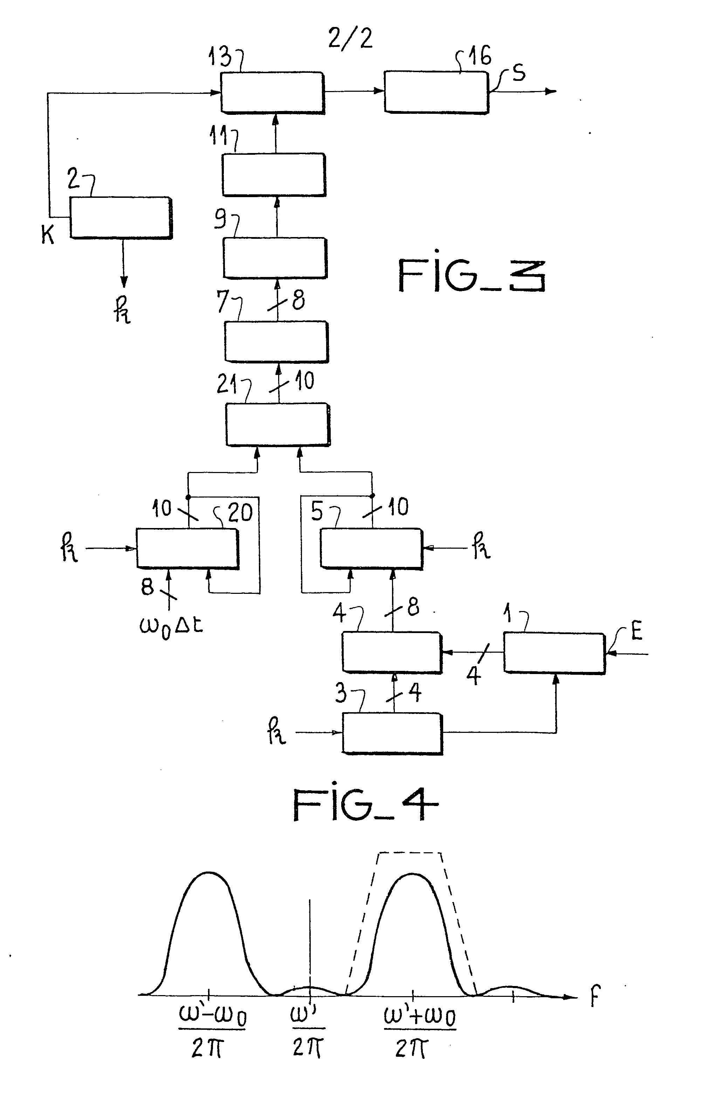

Dans les figures 1 et 3 les éléments correspondants sont repérés par les mêmes symboles. De plus dans ces deux figures les connexions autres que les connexions simples, sont, au voisinage de leur origine, barrées d'un petit trait à côté duquel un chiffre indique le nombre de signaux qu'elles sont capables de transmettre en parallèle.

La figure 1 représente un registre à décalage, 1, dont l'entrée de signal, E, est destinée à recevoir des signaux binaires qui vont moduler en phase un signal sinusoïdal, $K = \sin \omega t$, de fréquence $\frac{\omega}{2\pi}$ égale à 21,4 MHz délivré par un générateur de fréquences 2. Le générateur de fréquences 2 délivre également un signal rectangulaire k de facteur de forme $\frac{1}{2}$ et de fréquence égale à 256 KHz ; ce signal k est appliqué sur l'entrée d'un circuit de comptage 3 monté en diviseur par 16 et qui est déclenché par les fronts montants du signal k. Le circuit de comptage 3 fournit, sur une première sortie reliée à l'entrée de commande du registre à décalage 1, des impulsions à une fréquence de 16 kHz et, sur un ensemble de quatre sorties reliées à un premier groupe d'entrées d'une mémoire morte, 4, (ROM dans la littérature anglo-saxonne), des signaux représentatifs de son état. La mémoire morte 4 a 16 x 16 positions.

Le registre à décalage 1 est un registre à quatre étages dont les quatre sorties sont reliées à un second groupe d'entrées de la mémoire morte 4.

La mémoire morte 4 contient, sous forme binaire, les variations, $\Delta \varphi$, de phase en fonction des données numériques caractérisant la modulation, c'est-à-dire les variations de phase à faire subir au signal $\sin \omega t$ en fonction du contenu du registre à décalage 1. Le contenu du registre à décalage définit seize positions à l'intérieur de la mémoire morte 4 et les contenus de ces seize positions sont successivement lus au rythme des changements d'état du circuit de comptage 3, c'est-à-dire à la fréquence k de 256 kHz.

Un accumulateur, 5, constitué par un circuit additionneur dont la sortie est réunie à l'une de ses entrées, reçoit sur son autre entrée le signal $\Delta \varphi$ délivré par la mémoire morte 4. Dans l'accumulateur 5 l'addition des signaux d'entrée se fait sur les fronts descendants du signal k à 256 kHz ; l'accumulateur 5, par l'addition qu'il effectue, permet d'obtenir à sa sortie des signaux binaires représentant la phase modulée $\varphi(t)$ désirée.

Les signaux de sortie de l'accumulateur 5 sont appliqués à l'entrée d'un premier ensemble constitué par : une mémoire morte, 6, programmée pour donner la valeur du sinus de l'angle dont la valeur est représentée par le signal de sortie de l'accumulateur, un convertisseur numérique-analogique, 8, recevant les signaux de sortie de la mémoire morte et un filtre passe-bas, 10, branché sur la sortie du convertisseur 8. Ces trois circuits, 6-8-10, transforment le signal numérique $\varphi$ (t) en un signal analogique de la forme $\sin \varphi$ (t) qui est appliqué sur la première entrée d'un circuit mélangeur 12.

Les signaux de sortie de l'accumulateur 5 sont également appliqués à l'entrée d'un second ensemble constitué par : une mémoire morte, 7, programmée pour donner la valeur du cosinus correspondant à l'angle $\varphi$ (t) représenté par le signal de sortie de l'accumulateur, un convertisseur numérique-analogique, 9, recevant les signaux de sortie de la mémoire morte 7 et un filtre passe-bas, 11, branché sur la sortie de la mémoire morte 7. Ces trois circuits, 7-9-11, transforment le signal numérique $\varphi$ (t) en un signal analogique de la forme $\cos \varphi$ (t) qui est appliqué sur la première entrée d'un circuit mélangeur 13.

Un circuit déphaseur 14 qui reçoit sur son entrée le signal $\sin \omega t$ délivré par le générateur de fréquences 2, fournit deux signaux de sortie en quadrature, $\sin \omega t$ et $\cos \omega t$, respectivement sur ses deux sorties. Et les deux sorties du circuit déphaseur 14 sont respectivement reliées aux secondes entrées des circuits mélangeurs 12 et 13. Le circuit mélangeur 12 délivre donc un signal de sortie de la forme :

$$\cos \omega t . \sin \varphi \ (t) = \frac{1}{2} \sin \left[ \omega t + \varphi \ (t) \right] - \frac{1}{2} \sin \left[ \omega t - \varphi \ (t) \right]$$ et le circuit mélangeur 13 un signal de sortie de la forme :

$$\sin \omega t . \cos \varphi \ (t) = \frac{1}{2} \sin \left[ \omega t + \varphi \ (t) \right] + \frac{1}{2} \sin \left[ \omega t - \varphi \ (t) \right].$$

Un additionneur, 15, reçoit les deux signaux ci-avant mentionnés et délivre donc un signal de la forme $\sin \left[ \omega t + \varphi \ (t) \right]$ qu'un filtre passe-bande 16, dont la sortie S constitue la sortie du dispositif, débarrasse des signaux parasites situés hors de la bande de fréquences du signal utile : $\sin \left[ \omega t + \varphi \ (t) \right]$.

En fait l'additionneur 15 ne délivre pas uniquement le signal $\sin \left[ \omega t + \varphi \ (t) \right]$ et ceci pour plusieurs raisons :

- le circuit déphaseur 14 n'étant pas parfait ne donne pas, sur ses sorties, des signaux exactement en quadrature,

- les circuits 8, 10, 12 d'une part et 9, 11, 13 d'autre part n'étant pas parfaitement identiques des différences apparaissent sur les niveaux de sortie des composantes en $[\omega t - (t)]$ des signaux à la sortie des circuits mélangeurs 12 et 13,

- les circuits mélangeurs 12 et 13 laissent passer, entre autres, une partie du signal en $\omega t$.

Aussi est-il plus conforme à la réalité d'écrire que le signal de sortie de l'additionneur 15 est de la forme

$$A \sin \left[\omega t + \varphi (t)\right] + B \sin \left[\omega t - \varphi (t)\right] + C \sin \omega t$$

où A,B et C sont des constantes et où A est plus grand que B et C.

La figure 2 montre l'enveloppe du spectre de ce signal avec la raie à la fréquence $\frac{\omega}{2\pi}$ relative à la composante $C \sin \omega t$. Il est à noter que l'enveloppe du signal utile $A \sin \left[\omega t + \varphi (t)\right]$ et le résidu parasite $B \sin \left[\omega t - \varphi (t)\right]$ ainsi que la raie à la fréquence $\frac{\omega}{2\pi}$ se trouvent dans la même bande de fréquences. Il n'est donc pas possible de filtrer les composantes en $\omega t - \varphi (t)$ et en $\omega t$ pour obtenir le signal utile seul ; le filtre 16, comme il a été indiqué plus avant, ne sert qu'à filtrer les signaux situés hors de la bande du signal utile. Ces signaux en $\omega t - \varphi (t)$ et $\omega t$ introduisent une modulation d'amplitude parasite qui nécessite, pour éviter une dégradation importante du signal utile, que le signal de sortie du filtre 16 soit amplifié de façon linéaire ; or une telle amplification est malcommode et coûteuse.

La figure 3 est un schéma d'un dispositif de modulation de phase par un signal binaire, selon l'invention

La figure 3 représente un registre à décalage, 1, dont l'entrée de signal, E, est destinée à recevoir des signaux binaires qui vont moduler en phase un signal sinusoïdal, $K = \sin \omega't$, de fréquence $\frac{\omega'}{2\pi}$ égale à 21,368 MHz délivré par un générateur de fréquences 2. Le générateur de fréquences 2 délivre également un signal rectangulaire k de facteur de forme $\frac{1}{2}$ et de fréquence égale à 256 kHz ;ce signal k est appliqué sur l'entrée d'un circuit de comptage 3 monté en diviseur par 16, et qui est déclenché par les fronts montants du signal k. Le circuit de comptage 3 fournit, sur une première sortie reliée à l'entrée de commande du registre à décalage 1 des impulsions à 16 kHz et, sur un ensemble de quatre sorties, des signaux représentatifs de son état ; cet ensemble de quatre sorties est relié à un premier groupe d'entrées d'une mémoire morte, 4, dont 16 x 16 positions sont utilisées.

Le registre à décalage 1 est un registre à quatre étages dont les quatre sorties sont reliées à un second groupe d'entrées de la mémoire morte 4.

La mémoire morte 4 contient les variations, $\Delta \varphi$ , que doit subir la phase d'un signal sin $\omega t$ en fonction des données numériques contenues dans le registre à décalage 1. Le contenu du registre à décalage définit seize positions à l'intérieur de la mémoire morte 4 et les contenus de ces seize positions sont succesivement lus au rythme des changements d'état du circuit de comptage 3, c'est-à-dire à la fréquence k de 256 kHz.

Un accumulateur, 5, constitué par un circuit additionneur dont la sortie est réunie à l'une de ses entrées, reçoit sur son autre entrée le signal $\Delta \varphi$ délivré par la mémoire morte 4. Dans l'accumulateur 5 l'addition des signaux d'entrée se fait sur les fronts descendants du signal k ; l'accumulateur 5, par l'addition qu'il effectue, permet d'obtenir sur sa sortie des signaux binaires représentant la phase modulée $\varphi$ (t) désirée.

La partie du dispositif selon la figure 3 qui vient d'être décrite correspond à la partie du dispositif selon la figure 1 constituée des circuits 1 à 5 à la valeur près de la fréquence du signal K délivré par le générateur de fréquences 2 ; des différences importantes apparaissent dans le reste du dispositif.

Les signaux de sortie de l'accumulateur 5 sont appliqués à la première entrée d'un additionneur 21 qui reçoit sur sa seconde entrée le signal de sortie d'un accumulateur 20. L'accumulateur 20 est constitué, comme l'accumulateur 5, par un circuit additionneur dont la sortie est réunie à l'une de ses entrées et dans lequel l'addition se fait sur les fronts arrières des impulsions du signal k à 256 kHz. Celles des entrées de l'accumulateur 20 qui n'est pas reliée à la sortie, reçoit un signal numérique de la forme $\omega_o \cdot \Delta t$ où $\omega_o$ est une constante et où $\Delta t = \dfrac{1}{k} = \dfrac{1}{256 \text{ kHz}}$ soit environ $4\mu$ S. Le signal binaire de sortie de l'accumulateur 20 est donc de la forme $\omega_o t$ et le signal binaire de sortie de l'additionneur 21 de la forme $\omega_o t + \varphi$ (t).

L'additionneur 21 est relié aux entrées d'une mémoire morte, 7, programmée pour donner le cosinus de l'angle dont la valeur est représentée par son signal d'entrée ; la mémoire morte 7 fournit ainsi un signal binaire représentatif de $\cos \left[ \omega_o t + \varphi (t) \right]$. Ce signal binaire $\cos \left[ \omega_o t + \varphi (t) \right]$ est transformé en un signal analogique $\cos \left[ \omega_o t + \varphi (t) \right]$ par un convertisseur numérique-analogique 9 dont la sortie est couplée, par l'intermédiaire d'un filtre passe-bas 11, à la première entrée d'un circuit mélangeur 13 qui reçoit sur sa seconde entrée le signal sinusoïdal, $K = \sin \omega't$, délivré par le générateur de fréquences 2.

Le circuit mélangeur 13 qui reçoit sur ses entrées un signal de la forme $\sin \omega't$ et un signal de la forme $\cos\left[\omega_o t + \varphi(t)\right]$ donne donc un signal de sortie de la forme

$$A \sin\left[(\omega' + \omega_o)t + \varphi(t)\right] + A \sin\left[(\omega' - \omega_o)t - \varphi(t)\right] + B \sin \omega't +$$
$$C \cos\left[\omega_o t + \varphi(t)\right]$$

où A, B et C sont des constantes et où A est supérieure à B et C. Les composantes $B \sin \omega't$ et $C \cos\left[\omega_o t + \varphi(t)\right]$ représentent des résidus des signaux d'entrée. Dans ce signal de sortie le signal utile est

$$A \sin\left[(\omega' + \omega_o)t + \varphi(t)\right]$$

et $\omega'$ et $\omega_o$ ont été choisis pour que la fréquence $\dfrac{\omega' + \omega_o}{2\pi}$ de ce signal utile soit égale à la fréquence $\dfrac{\omega}{2\pi} = 21,4$ MHz du signal utile du dispositif selon la figure 1 ; ainsi les dispositifs suivant les figures 1 et 3 ont la même fonction à assurer mais, comme il apparaîtra dans ce qui suit, leurs performances sont différentes.

La figure 4 montre le spectre de ce signal de sortie du circuit mélangeur 13, avec la raie à la fréquence $\dfrac{\omega'}{2\pi}$ correspondant en terme $B \sin \omega't$, l'enveloppe en cloche centrée autour de la fréquence $\omega' - \omega_o$ et correspondant à la composante $A \sin\left[(\omega' - \omega_o)t - \varphi(t)\right]$ et l'enveloppe en cloche centrée autour de la fréquence $\omega' + \omega_o$ et correspondant à la composante $A \sin\left[(\omega' + \omega_o)t + \varphi(t)\right]$. Il est à noter que la fréquence $\dfrac{\omega_o}{2\pi}$ ayant été choisie de valeur faible (32 kHz) par rapport à la fréquence $\dfrac{\omega'}{2\pi}$ (21,368 MHz) le spectre correspondant à la composante $C \cos\left[\omega_o t + \varphi(t)\right]$ est situé dans une bande de fréquences très inférieure à celles des trois autres composantes et n'a pas, de ce fait, été représenté sur la figure 4.

Le circuit mélangeur 13 est relié à l'entrée d'un filtre passe-bande 16 dont la sortie S constitue la sortie du dispositif selon la figure 3. Ce filtre 16 dont la réponse en amplitude a été représentée en traits interrompus sur la figure 4 permet de séparer le signal utile, et lui seul, des composantes parasites contenues dans le signal de sortie du circuit mélangeur 13.

Il est à noter que le choix de $\dfrac{\omega_o}{2\pi}$ en fonction de la fréquence utile doit être fait de telle manière que les enveloppes en cloches (figure 4) des composantes $A \sin\left[(\omega' + \omega_o)t + \varphi(t)\right]$ et $A \sin\left[(\omega' - \omega_o)t - \varphi(t)\right]$ ne se recouvrent pas, même partiellement, afin que le filtre 16 puisse fournir sur sa sortie tout le signal utile et rien que le signal utile. Par contre la fréquence $\frac{\omega_o}{2\pi}$ ne doit pas être choisie trop grande afin que le signal $\omega_o t$ fourni par l'accumulateur 8 se rapproche le plus possible d'une droite; en effet, comme ce signal est fait de marches d'escalier de hauteur $\omega_o \Delta t$, plus $\omega_o$ est petit et plus le signal obtenu se rapproche du signal théorique désiré.

Le dispositif selon la figure 3 est un dispositif expérimental dans lequel les circuits pour l'obtention du signal $\omega_o t$ (sortie de l'accumulateur 20) sont distincts des circuits pour l'obtention du signal $\varphi$ (t) (sortie de l'accumulateur 5) ce qui a permis, lors de l'étude du circuit, de modifier facilement la valeur de $\omega_o$ et, dans la description ci-avant, de clarifier l'exposé. Il est possible de programmer la mémoire morte 4 de manière qu'elle donne, à chaque période $\Delta t$ du signal k, non plus un signal de la forme $\Delta \varphi$ mais un signal de la forme $\omega_o \Delta t + \Delta \varphi$ ; l'accumulateur 20 et l'additionneur 21 deviennent alors inutiles et la sortie de l'accumulateur 5 est reliée directement à l'entrée de la mémoire morte 7.

Outre qu'il permet de séparer le signal utile de tous les signaux inutiles le dispositif selon la figure 3 se distingue du dispositif selon l'art connu décrit à l'aide de la figure 1 par sa simplicité; en effet il ne nécessite pas de circuit déphaseur et permet d'économiser une mémoire morte, un convertisseur numérique-analogique, un filtre passe-bas et un circuit mélangeur. Dans la version dont il a été question au paragraphe précédent et où le signal $\omega_o \Delta t + \Delta \varphi$ est obtenu directement sur la sortie de la mémoire morte 4 convenablement programmée, le dispositif selon l'invention permet, de plus, d'économiser un additionneur par rapport au dispositif selon la figure 1 et ceci sans même nécessiter l'emploi d'un seul circuit supplémentaire comme c'était le cas avec l'accumulateur 20 du dispositif selon la figure 3.

Il est à noter de plus que le dispositif selon l'invention se prête beaucoup plus facilement à une réalisation en circuits intégrés que le dispositif selon la figure 1.

Le domaine couvert par la présente invention s'étend, en particulier, au procédé de modulation de phase tel qu'il est mis en œuvre dans l'exemple décrit à l'aide des figures 3 et 4

## REVENDICATIONS

1. Procédé de modulation de phase par un signal binaire, consistant à produire un signal de la forme $\sin\left[\omega t + \varphi(t)\right]$ où $\omega$ est une constante, t le temps et $\varphi(t)$ la phase modulée, caractérisé en ce qu'il est produit un signal de la forme $\omega_o t + \varphi(t)$ où $\omega_o$ est une constante, puis un signal de la forme $\cos\left[\omega_o t + \varphi(t)\right]$, en ce que le signal de la forme $\cos\left[\omega_o t + \varphi(t)\right]$ est mélangé à un signal de la forme $\sin(\omega - \omega_o)t$, en ce que le résultat du mélange est filtré pour en extraire le signal utile $\sin\left[\omega t + \varphi(t)\right]$ et en ce que $\omega_o$ est choisi de façon que la fréquence $\dfrac{\omega - \omega_o}{2}$ soit extérieure au spectre du signal utile, $\sin\left[\omega t + \varphi(t)\right]$, qui se trouve centré sur $\dfrac{\omega}{2\pi}$.

2. Dispositif pour la mise en œuvre du procédé selon la revendication 1, caractérisé en ce qu'il comporte : des premiers moyens de calcul (1,3,4,5) recevant le signal binaire et fournissant, au moins sous forme binaire et à un rythme donné, un signal de sortie représentatif de $\varphi(t)$ et présentant à cet effet une variation prédéterminée fonction de ce signal binaire; des seconds moyens de calcul (20) fournissant, au moins sous forme binaire et au rythme donné, un signal de sortie présentant une variation linéaire prédéterminée en fonction du temps; un circuit de transformation (21,7,9,11) couplé aux sorties des premiers et seconds moyens de calcul, fournissant, au moins sous forme binaire et au rythme donné, un signal de la forme $\cos\left[\omega_o t + \varphi(t)\right]$ et donnant à cet effet la fonction cosinus de la valeur totale de ses signaux d'entrée; un générateur de fréquences (2) fournissant un signal de la forme $\sin \omega' t$ où $\omega'$ est grand devant $\omega_o$; un circuit mélangeur (13) couplé au circuit de transformation et au générateur de fréquences; et un filtre passe-bande (16) couplé à la sortie du circuit mélangeur.

3. Dispositif selon la revendication 2, caractérisé en ce que les premiers moyens de calcul comportent un registre à décalage (1) recevant le signal binaire, une mémoire morte (4) dont la lecture est commandée par le contenu du registre à décalage et un accumulateur (5) fournissant un signal représentatif de la somme dans le temps des valeurs prises, à des instants régulièrement espacés, par le signal de sortie de la mémoire morte.

4. Dispositif selon la revendication 2, caractérisé en ce que les seconds moyens de calcul comportent un accumulateur (20) fournissant, à des instants régulièrement espacés, un signal de sortie fonction linéaire du temps qui s'écoule.

5. Dispositif selon la revendication 2, caractérisé en ce que le circuit de transformation comporte, en série, un additionneur (21), une mémoire morte (7) programmée pour donner la fonction cosinus, un convertisseur numérique-analogique (9) et un filtre passe-bas (11).

FIG_1

FIG_2

FIG_3

FIG_4

0036344

Numéro de la demande

Office européen
des brevets

**RAPPORT DE RECHERCHE EUROPEENNE**

EP 81 40 0270

| Catégorie | DOCUMENTS CONSIDERES COMME PERTINENTS | | Revendica-tion concernée |
|---|---|---|
| | Citation du document avec indication, en cas de besoin, des parties pertinentes | | |
| A | FR - A - 2 292 372 (IBM)<br>* Page 1, lignes 10-18; page 3, ligne 35 - page 4, ligne 20; figure 1 * | | 1-5 |
| | -- | | |
| A | US - A - 3 699 479 (THOMPSON et al. )<br>* Colonne 1, lignes 30-41 * | | 1 |
| | ---- | | |

**CLASSEMENT DE LA DEMANDE (Int. Cl.³)**

H 04 L 27/20

**DOMAINES TECHNIQUES RECHERCHES (Int. Cl.³)**

H 04 L 27/20
27/18
27/00
H 03 C 3/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-06-1981 | MIKKELSEN |

OEB Form 1503.1   06.78